(19) Europäisches Patentamt
European Patent Office
Office européen des brevets

(11) **EP 3 338 060 B1**

(12) **EUROPÄISCHE PATENTSCHRIFT**

(45) Veröffentlichungstag und Bekanntmachung des Hinweises auf die Patenterteilung:
**22.07.2020  Patentblatt 2020/30**

(51) Int Cl.:
*G01D 5/353* (2006.01)      *G01B 11/16* (2006.01)
*G01L 1/24* (2006.01)       *F21V 8/00* (2006.01)

(21) Anmeldenummer: **16756664.5**

(22) Anmeldetag: **17.08.2016**

(86) Internationale Anmeldenummer:
**PCT/EP2016/069542**

(87) Internationale Veröffentlichungsnummer:
**WO 2017/029340 (23.02.2017 Gazette 2017/08)**

(54) **OPTISCHER KRÜMMUNGSSENSOR**

OPTICAL CURVATURE SENSOR

DÉTECTEUR DE COURBURE OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.08.2015  AT 5392015**

(43) Veröffentlichungstag der Anmeldung:
**27.06.2018  Patentblatt 2018/26**

(73) Patentinhaber: **Zackl, Wilhelm**
**3040 Neulengbach (AT)**

(72) Erfinder: **Zackl, Wilhelm**
**3040 Neulengbach (AT)**

(74) Vertreter: **Cunow, Gerda**
**Cunow Patentanwalts KG**
**Teschnergasse 33/1/3**
**1180 Wien (AT)**

(56) Entgegenhaltungen:
**EP-A2- 0 939 064**

- DRAGAN Z STUPAR ET AL: "The possibility of using a plastic optical fibre as a sensing element in civil structural health monitoring", PHYSICA SCRIPTA, INSTITUTE OF PHYSICS PUBLISHING, BRISTOL, GB, Bd. 2013, Nr. T157, 15. November 2013 (2013-11-15), Seite 14031, XP020252855, ISSN: 1402-4896, DOI: 10.1088/0031-8949/2013/T157/014031 [gefunden am 2013-11-15]
- RAHNAVARDY K ET AL: "INVESTIGATION AND APPLICATION OF THE FRUSTRATED-TOTAL-INTERNAL-REFLECTION PHENOMENON IN OPTICAL FIBERS", APPLIED OPTICS, OPTICAL SOCIETY OF AMERICA, WASHINGTON, DC; US, Bd. 36, Nr. 10, 1. April 1997 (1997-04-01) , Seiten 2183-2187, XP000690371, ISSN: 0003-6935, DOI: 10.1364/AO.36.002183

**Beschreibung**

Die Erfindung betrifft einen Lichtleiter, einen optischen Sensor mit einem Lichtleiter und ein Verfahren zum Herstellen eines Lichtleiters.

Aus dem Stand der Technik sind optisch arbeitende Dehnungssensoren bekannt, welche eine Ausdehnung von in den Sensoren verwendeten Lichtleitern erfassen können. Dabei werden üblicherweise aufgrund von Interferenz an regelmäßig im Lichtleiter angeordneten Spalten bestimmte Bereiche des Lichtspektrums ausgelöscht. Hierfür ist zum einen Licht mit einem bestimmten Spektrum zum Einspeisen in den Lichtleiter erforderlich, und zum anderen ein Mittel zur Spektralanalyse des aus dem Lichtleiter wieder austretenden Lichtes. Vorteilhaft an derartigen Sensoren ist, dass sie mit hoher Genauigkeit Längenänderungen im Nanometerbereich erfassen können. Nachteilig ist allerdings, dass durch die benötigten speziellen Bauteile ein derartig aufgebauter Sensor nur schwer zu miniaturisieren ist und in der Herstellung sehr kostspielig ist. Weiters ist eine präzise, für diese Art von Sensoren erforderliche Anordnung von Spalten im Lichtleiter nur aufwändig zu erzeugen, was sowohl die Kosten als auch die Anfälligkeit für Fehler und/oder Ausfälle des Sensors erhöht.

Aus dem Dokument DRAGAN Z STUPAR ET AL: "The possibility of using a plastic optical fibre as a sensing element in civil structural health monitoring", PHYSICA SCRIPTA, INSTITUTE OF PHYSICS PUBLISHING, BISTROL, GB, Bd. 2013, Nr T157, 15. November 2013 (2013-11-15), Seite 14031 ist ein Lichtleiter mit wenigstens einem Riss geoffenbart, welcher Riss von zwei Begrenzungsflächen begrenzt wird, welche Begrenzungsflächen einen Öffnungswinkel größer 0° miteinander einschließen. Orthogonal zu einer Ausbreitungsrichtung des Lichts sind hierbei in den Lichtleiter makroskopische Keile eingesetzt.

Aus dem Dokument RAHNAVARDY K ET AL:" INVESTIGATION AND APPLICATION OF THE FRUSTRATED-TOTAL-INTERNAL-REFLECTION PHENOMENON IN OPTICAL FIBERS", APPLIED OPTICS, OPTICAL SOCIETY OF AMERICA, WASHINGTON, DC, US, Bd. 36, Nr. 10, 1. April 1997 (1997-04-01), Seiten 3183-2187 ist ein Lichtleiter mit einem Spalt, der sich zwischen zwei Faserstücken erstreckt, geoffenbart, wobei der Spalt sich nicht ununterbrochen erstreckt, so dass ein Öffnungswinkel in diesem Spalt nicht zu definieren ist, so dass weiterhin an den Begrenzungsflächen des Spaltes evaneszente Wellen nicht entstehen können.

Der Erfindung liegt daher die Aufgabe zu Grunde, die oben beschriebenen Nachteile zu überwinden und eine Möglichkeit für einen hochsensiblen, optischen Sensor zu bieten, der gleichzeitig leicht zu miniaturisieren und günstig herzustellen ist.

Gelöst wird diese Aufgabe erfindungsgemäß durch einen Lichtleiter nach Anspruch 1.

Diese Aufgabe wird weiters gelöst durch einen optischen Sensor nach Anspruch 6.

Bevorzugte Ausführungsformen der Erfindung sind Gegenstand der Unteransprüche.

Nachstehend werden bevorzugte und vorteilhafte Ausführungsbeispiele der Erfindung anhand der Zeichnungen näher beschrieben. Gleiche Bauteile sind dabei der Übersicht halber in unterschiedlichen Ausführungsformen mit gleichen Bezugszeichen gekennzeichnet. Die Herstellungsverfahren fallen nicht unter die Ansprüche.

Es zeigt zum Teil stark schematisiert:

Fig. 1     einen Längsschnitt durch eine erste Ausführungsform eines erfindungsgemäßen Lichtleiters,
Fig. 2     den Lichtleiter von Fig. 1 in der Draufsicht,
Fig. 3     einen Ausschnitt aus Fig. 1,
Fig. 4     den Ausschnitt von Fig. 3 in gebogenem Zustand,
Fig. 5     den Ausschnitt von Fig. 3 in gedehntem Zustand,
Fig. 6     ein schematisiert dargestelltes Sensorelement mit zwei erfindungsgemäßen Lichtleitern,
Fig. 7     einen beispielhaften Graphen zum Einleiten von Licht in ein Sensorelement von Fig. 6,
Fig. 8     eine erste Ausführungsform eines Sensors mit zwei erfindungsgemäßen Lichtleitern,
Fig. 9     eine erste Variante eines erfindungsgemäßen Lichtleiters zusammen mit einem Diagramm des Brechungsindex des Lichtleiters,
Fig. 10    eine zweite Variante eines erfindungsgemäßen Lichtleiters zusammen mit einem Diagramm des Brechungsindex des Lichtleiters,
Fig. 11    eine dritte Variante eines erfindungsgemäßen Lichtleiters, Fig. 11a einen Schnitt durch diesen und das zugehörige Diagramm des Brechungsindex,
Fig. 12    eine vierte Variante eines erfindungsgemäßen Lichtleiters zusammen mit einem Diagramm des Brechungsindex des Lichtleiters,
Fig. 13    eine fünfte Variante eines erfindungsgemäßen Lichtleiters, sowie einen Schnitt durch diesen,
Fig. 14    eine zweite Ausführungsform eines Sensors,
Fig. 15    die Ausführungsform von Fig. 8 in der Darstellungsweise von Fig. 14,
Fig. 16    eine dritte Ausführungsform eines Sensors,
Fig. 17    eine vierte Ausführungsform eines Sensors, Fig. 17a einen Querschnitt durch den Lichtleiter von Fig. 17

Fig. 18    eine erste Ausführungsform für ein Ende des erfindungsgemäßen Lichtleiters,

Fig. 19    eine zweite Ausführungsform für ein Ende des erfindungsgemäßen Lichtleiters,

Fig. 20    eine dritte Ausführungsform für ein Ende des erfindungsgemäßen Lichtleiters,

Fig. 21    eine vierte Ausführungsform für ein Ende des erfindungsgemäßen Lichtleiters,

Fig. 22    eine Prinzipskizze eines Herstellungsverfahrens des erfindungsgemäßen Lichtleiters,

Fig. 23    eine erste Durchführungsform des Verfahrens,

Fig. 24    eine zweite Durchführungsform des Verfahrens,

Fig. 25    eine dritte Durchführungsform des Verfahrens,

Fig. 26    weitere Durchführungsformen des Verfahrens,

Fig. 27    eine erste Methode zum Erzeugen des Einfallswinkels $\theta$,

Fig. 28    eine zweite Methode zum Erzeugen des Einfallswinkels $\theta$,

Fig. 29    eine erste Methode zum Erzeugen einer Kerbe,

Fig. 30    eine zweite Methode zum Erzeugen einer Kerbe,

Fig. 31    eine dritte Methode zum Erzeugen einer Kerbe,

Fig. 32    eine vierte Methode zum Erzeugen einer Kerbe,

Fig. 33    eine erste Ausführungsform einer alternativen sensorischen Anwendung eines erfindungsgemäßen Lichtleiters,

Fig. 34    einen Referenz-Lichtleiter für die Ausführungsform von Fig. 33,

Fig. 35    eine zweite Ausführungsform einer alternativen sensorischen Anwendung eines erfindungsgemäßen Lichtleiters und

Fig. 36    einen Referenzlichtleiter für die Ausführungsform von Fig. 35.

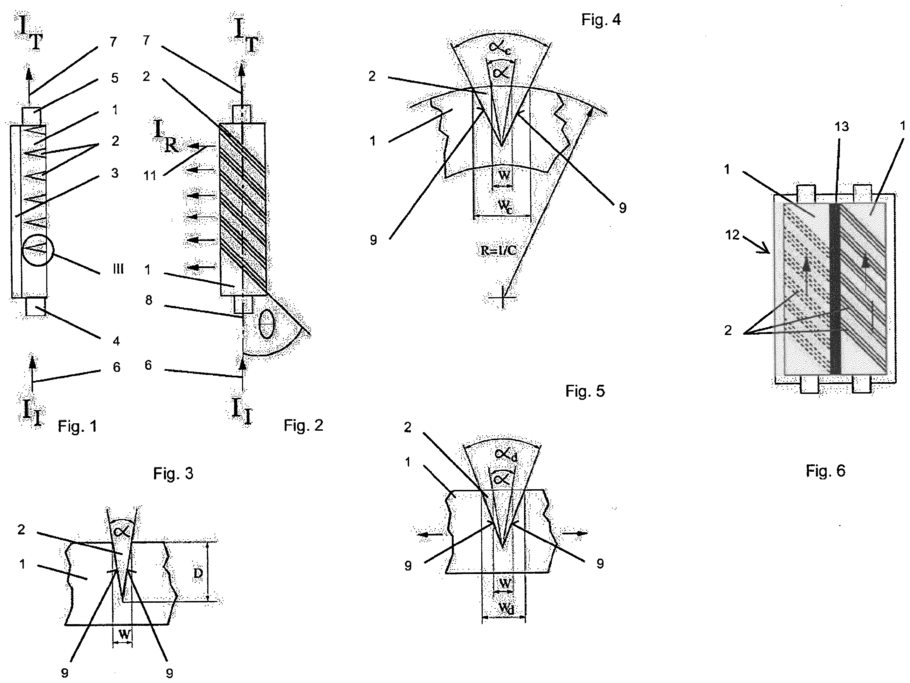

Fig. 1 zeigt stark schematisiert einen Lichtleiter 1 mit sechs symbolischen Rissen 2, der auf einem Träger 3 angeordnet ist, sowie ein Mittel zum Einkoppeln von Licht 4 und ein Mittel zum Auskoppeln von Licht 5 aufweist. Ein Pfeil 6 stellt symbolisch Licht dar, das mit einer Eingangsintensität $I_1$ in den Lichtleiter geleitet wird. Ein Pfeil 7 stellt symbolisch Licht dar, das mit einer Ausgangsintensität $I_T$ aus dem Lichtleiter austritt.

In der Draufsicht von Fig. 2 erkennt man, dass die Risse 2 des Lichtleiters 1 eine Längsrichtung aufweisen, die mit einer Ausbreitungsrichtung des Lichtleiters (symbolisch dargestellt durch die Achse 8) einen Einfallswinkel $\theta$ einschließen.

Der Einfallswinkel $\theta$ wird dabei so gewählt, dass wenigstens ein Teil des Lichtes am Übergang vom Lichtleiter 1 zum Riss 2 reflektiert bzw. totalreflektiert werden kann. Abhängig vom Material, welches den Riss "füllt" (im dargestellten Beispiel Luft), dem Material des Lichtleiters, der Wellenlänge des in den Lichtleiter geleiteten Lichts und weiteren Faktoren, wie beispielsweise der Betriebstemperatur, bei welcher der Lichtleiter eingesetzt werden soll, kann der Einfallswinkel $\theta$ vom Fachmann sinnvoll gewählt werden. Bei den im Stand der Technik üblichen Materialien und Wellenlängen ist grundsätzlich zu erwarten, dass gut messbare Ergebnisse erzielt werden, wenn der Einfallswinkel $\theta$ zwischen 20° und 80° liegt.

In der dargestellten bevorzugten Ausführungsform ist $\theta=45°$ gewählt, da sich dieser Winkel für Totalreflexion in den meisten Fällen bewährt hat.

Die Geometrie der Risse selbst ist anhand von Fig. 3 gezeigt. Jeder Riss hat dabei einen von zwei Begrenzungsflächen 9 eingeschlossenen Öffnungswinkel a, eine Höhe D und eine Öffnungsweite W. Die Darstellung ist dabei der besseren Übersicht halber stark schematisiert. Üblicherweise liegt die Öffnungsweite W der Risse im Nanometerbereich. Allerdings kann es bei Lichtleitern mit einer großen Höhe D auch vorkommen, dass die Öffnungsweite sehr viel größer wird. Allerdings wird dann nur der Bereich des Risses nahe beim Scheitel des Öffnungswinkels sensorisch genutzt, da die im Folgenden beschriebenen Effekte, welche bei der Erfindung genutzt werden, bei zu großen Abständen nicht auftreten.

Erfindungsgemäß kann daher für den Winkel $\alpha$ in einem Neutralzustand des Lichtleiters 1:

$$0 < \alpha < \frac{k}{d} < 90°,$$

gelten, wobei d die Höhe des Lichtleiters ist und k ein Faktor ist, welcher von einer Wellenlänge $\lambda$, mit welcher der Lichtleiter 1 betrieben wird, abhängt, wobei der Faktor k bei einer Wellenlänge $\lambda$ von 0,0002mm bis 0,001mm gleich 0,57 ist, wobei der Faktor k bei einer Wellenlänge $\lambda$ von 0,001mm bis 0,003mm gleich 1,7 ist, wobei der Faktor k bei einer Wellenlänge $\lambda$ von 0,003mm bis 0,05mm gleich 28 ist und wobei der Faktor k bei einer Wellenlänge $\lambda$ von 0,05mm bis 1mm gleich 157 ist, wie auch in der folgenden Tabelle gezeigt:

|  | λ [mm] | k |
|---|---|---|
| UV Ultraviolettes Licht und VIS Sichtbares Licht | 0,0002-0,001 | 0,57 |
| NIR Nahes Infrarot | 0,001-0,003 | 1,7 |
| MIR Mittleres Infrarot | 0,003-0,05 | 28 |
| IR Fernes Infrarot | 0,05-1 | 157 |

Dadurch wird, im Gegensatz zu Bragg-Sensoren, welche mit Interferenz arbeiten, der Goos-Hähnchen-Effekt genutzt. Dieser tritt grundsätzlich bei jeder Totalreflexion auf. Dabei dringt das Licht ungefähr bis zu einer Tiefe seiner halben Wellenlänge vom optisch dichteren in das optisch dünnere Medium ein und wird mit einer räumlichen Verschiebung reflektiert. Dieser Teil des Lichts, welcher dabei in das optisch dünnere Medium eindringt, wird auch evaneszente Welle genannt. Wird im Bereich der evanezsenten Welle ein weiteres optisches Medium mit höherer optischer Dichte angeordnet, kann ein Teil des Lichts trotz Totalreflexion in das optisch dichtere Medium "sickern" (engl.: "leak"). Wenn dies eintritt, spricht man von frustrierter Totalreflexion. Der Effekt der frustrierten Totalreflexion tritt dabei umso stärker auf, umso weiter das optisch dichtere Medium im Bereich der evaneszenten Welle angeordnet ist.

Auf den erfindungsgemäßen Lichtleiter übertragen bedeutet das, dass bei geringerem Öffnungswinkel $\alpha$ und bei geringerer Öffnungsweite W mehr Licht in Richtung der Ausbreitungsrichtung 8 wieder in den Lichtleiter 1 hinein "sickert".

Weicht der Einfallswinkel $\theta$ nur geringfügig, z.B. um wenige Grade vom kritischen Winkel der Totalreflexion $(90-\arcsin(\frac{n_m}{n}))$ ab, kann auch dadurch eine nur teilweise Reflexion bzw. Totalreflexion des Lichtes erzielt werden.

Der Anteil des reflektierten bzw. totalreflektierten Lichtes ist in Fig. 2 durch Pfeile 11 dargestellt, welche die austretende bzw. reflektierte Reflexionsintensität $I_R$ symbolisieren. Eine Messung einer Änderung des Risses kann dabei theoretisch sowohl über ein Erfassen der Ausgangsintensität $I_T$, als auch über ein Erfassen der Reflexionsintensität $I_R$ erfolgen. In bestimmten Fällen, bei denen beispielsweise Streuungsverluste ebenfalls erfasst werden sollen, zum Beispiel, um den Zustand des Sensors selbst zu überwachen, können auch beide Intensitäten $I_R$ und $I_T$ erfasst und mit der Eingangsintensität $I_I$ verglichen werden.

Fig. 4 illustriert, wie sich ein Verformen des Lichtleiters durch Verbiegen auf die Öffnungsweite W und den Öffnungswinkel $\alpha$ auswirkt. Fig. 5 illustriert analog eine Verformung durch Dehnen des Lichtleiters. Der unverformte Leiter von Fig. 3 kann gegenüber Fig. 4 und Fig. 5 als in einem Neutralzustand befindlich betrachtet werden.

Man erkennt, dass ein einzelner Lichtleiter zwar sowohl in einem Dehnungs- als auch in einem Biegungs-Sensor verwendet werden kann, dass aber nicht zwischen den beiden Verformungen unterschieden werden kann, wenn über eine Änderung der Lichtintensitäten eine Änderung der Öffnungsweite W erkannt wird. Sind jedoch alle Risse eines Lichtleiters bezüglich der Orientierung vom Scheitelpunkt zur Öffnung gleich ausgerichtet, können in einem Sensor zwei Lichtleiter mit entgegengesetzt orientierten Rissen angeordnet werden.

Grundsätzlich ist, insbesondere bei erfindungsgemäßen Lichtleitern mit einem flachen Querschnitt, die sensorische Empfindlichkeit bei Deformationen orthogonal zu den Rissen maximal und längs der Risse minimal, also insgesamt vektoriell. Durch Kombination zweier oder mehr erfindungsgemäßer Lichtleiter mit unterschiedlichem Winkel $\theta$ der Risse, welche bevorzugt so angeordnet sind, dass die Längsrichtungen der Risse orthogonal zueinander stehen, können Dehnungen und Biegungen in verschiedene Richtungen auf einmal gemessen werden.

Ein Sensorelement 12 mit zwei derartig angeordneten Lichtleitern 1 ist in Fig. 6 gezeigt. Weiters zeigt die Fig. 6 ein optisches Trennelement 13, durch welches verhindert wird, dass aus einem Leiter austretendes Licht in den jeweils anderen eintritt und so die Messungen beeinträchtigt.

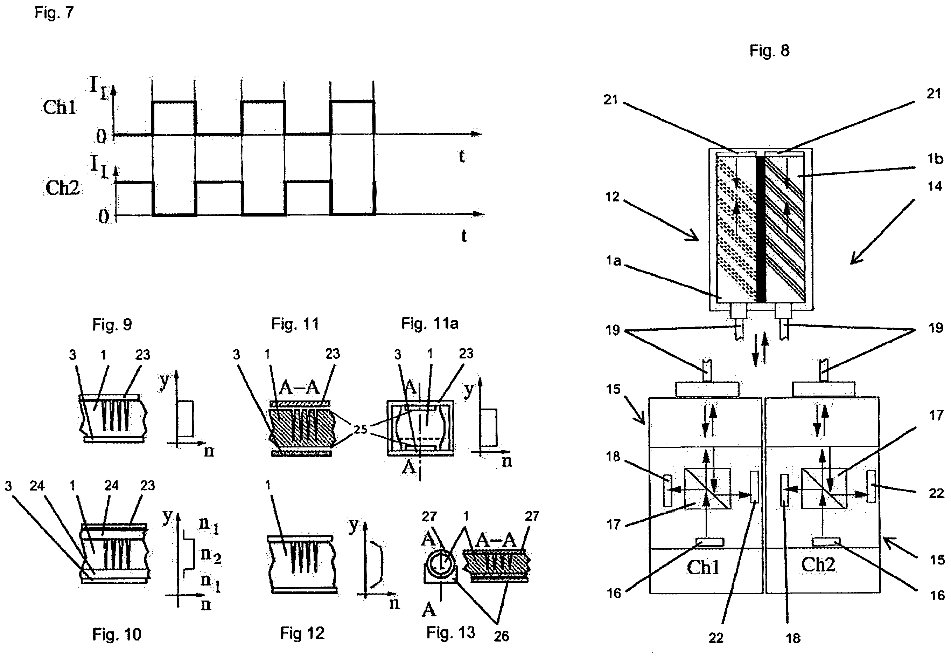

Bei einer alternativ oder zusätzlich bevorzugten Anwendungsform eines solchen Sensorelementes kann in beide Lichtleiter auch abwechselnd Licht eingekoppelt werden, wie Fig. 7 illustriert. Dabei zeigt der obere Graph die Eingangsintensität $I_I$ des in den ersten Lichtleiter 1a eingekoppelten Lichts und der zweite Graph die Eingangsintensität $I_I$ des in den zweiten Lichtleiter 1b eingekoppelten Lichts jeweils bei gleicher Zeit. Wird die Modulationsfrequenz durch den Fachmann entsprechend gewählt, kann zusätzlich der Vorteil erzielt werden, dass Licht aus externen Lichtquellen im Bereich eines Sensors, der mit erfindungsgemäßen Lichtleitern ausgestattet ist, rechnerisch aus den Messungen entfernt werden kann. Hierzu muss lediglich die Frequenz bekannt sein, mit der mögliche Lichtquellen in der Umgebung des Sensors Licht aussenden. Besonders günstig ist es dabei, wenn zwischen der Frequenz des eingekoppelten Lichts und des Umgebungslichts ein möglichst großer Unterschied gewählt wird.

Selbstverständlich sind auch weitere Maßnahmen denkbar und vorteilhaft, um zu verhindern, dass das aus einem Lichtleiter austretende Licht die Messung an einem benachbarten Lichtleiter beeinträchtigt. Beispielsweise kann das in benachbarte Lichtleiter eingeleitete Licht unterschiedliche Wellenlängen und/oder eine unterschiedliche Polarisation haben.

Unterschiedliche Polarisationsrichtungen und Wellenlängen können dabei ebenfalls genutzt werden, um die Anzahl der (optischen) Zuleitungen zu einem Sensorelement zu reduzieren, indem die durch Wellenlänge oder Polarisationsrichtung unterscheidbaren Lichtsignale für die einzelnen Lichtleiter in einem normalen Lichtleiter vereinigt werden und nach der Weiterleitung wieder aufgetrennt werden können.

Fig. 8 zeigt einen Sensor 14 mit zwei erfindungsgemäßen Lichtleitern 1, die in einem Sensorelement 12 angeordnet sind. Zwei Steuerungseinheiten 15 übernehmen dabei das Einkoppeln, Auskoppeln und Auswerten des Lichts.

Jede Steuerungseinheit 15 weist dabei ein Mittel zum Erzeugen von Licht 16 auf. Die Mittel zum Erzeugen von Licht können dabei vom Fachmann frei aus dem Stand der Technik gewählt werden, beispielsweise Leuchtdioden, Laser, Glühlampen und dergleichen. Weiters können die Steuerungseinheiten abhängig von den gewählten Mitteln zum Erzeugen von Licht 16 nicht dargestellte optische Elemente, wie beispielsweise Linsen, Blenden und dergleichen, enthalten. Diese können grundsätzlich an geeigneter Stelle in den Steuerungselementen 15 angeordnet sein. Es wird allerdings als vorteilhaft betrachtet, die optischen Elemente im Strahlenverlauf des Lichts unmittelbar nach dem Mittel zum Erzeugen von Licht 16 anzuordnen. Der Strahlenverlauf bzw. die Ausbreitungsrichtung des Lichts ist in Fig. 8 symbolisch durch Pfeile dargestellt.

Da beide Steuerungseinheiten 16 ident aufgebaut sind und sich der Weg, welchen das Licht durch die Steuerungseinheiten 16 und das Sensorelement 12 nimmt, bis auf die Orientierung der erfindungsgemäßen Lichtleiter 1 nicht je Steuerungseinheit unterscheidet, wird der Weg des Lichts durch die Anordnung für beide Seiten des Sensors gleichzeitig beschrieben.

Vom Mittel zum Erzeugen des Lichts 16 ausgehend, trifft das Licht in der Steuerungseinheit 16 zunächst auf einen Strahlteiler 17. Ein Teil des Lichts wird vom Strahlteiler 17 in einen Eingangsdetektor 18 gelenkt. Mit diesem kann beispielsweise erfasst werden, mit welcher Eingangsintensität $I_I$ das Licht die Steuerungseinheit 15 verlässt oder beispielsweise auch mit weicher Frequenz, wenn dieses wie in Fig. 7 gezeigt moduliert wird.

Nach dem Strahlteiler 17 gelangt das nicht zum Eingangsdetektor 18 abgezweigte Licht in einen herkömmlichen Lichtleiter 19, der das Licht zum Sensorelement 12 leitet. Im Sensorelement 12 durchläuft das Licht den erfindungsgemäßen Lichtleiter 1 und trifft dann auf ein Spiegelelement 21, von wo aus es den erfindungsgemäßen Lichtleiter 1 ein weiteres Mal durchläuft. Selbstverständlich könnte an Stelle des Spiegelelementes 21 auch direkt, gegebenenfalls über einen Lichtleiter oder dergleichen verbunden, ein Detektor angeordnet sein, um das Licht nach einmaligem Durchlaufen der erfindungsgemäßen Lichtleiter 1 zu erfassen. Allerdings wird in der in Fig. 8 gezeigten Ausführungsform der erfindungsgemäße Lichtleiter 1a, 1b zweimal durchlaufen, was die Empfindlichkeit des Sensors erhöht.

Nachdem der erfindungsgemäße Lichtleiter 1 zum zweiten Mal durchlaufen wurde, gelangt das Licht über den herkömmlichen Lichtleiter 19 zurück in die Steuerungseinheit 15 und trifft in dieser erneut auf den Strahlteiler 17. Dieser lenkt einen Teil des Lichts in einen Ausgangsdetektor 22.

Die Intensitätswerte $I_T$, welche von den Ausgangsdetektoren 22 erfasst werden, geben dann Aufschluss über die Stärke der Verformung der erfindungsgemäßen Lichtleiter. Ein Vergleich der von den Ausgansdetektoren erfassten Ausgansintensitäten $I_T$ gibt Aufschluss über die Art der Verformung (Biegung/Dehnung).

Der in Fig. 9 gezeigte, erfindungsgemäße Lichtleiter 1 ist auf einem Träger 3 angeordnet und weist eine Deckschicht 23 auf. Die Deckschicht 23 kann dabei verschiedene Funktionen erfüllen. Zum einen kann so verhindert werden, dass Schmutzpartikel aus der Umgebung in die Risse 2 eindringen. Der Graph zeigt, dass der Brechungsindex des Lichtleiters über seine Höhe hinweg konstant ist.

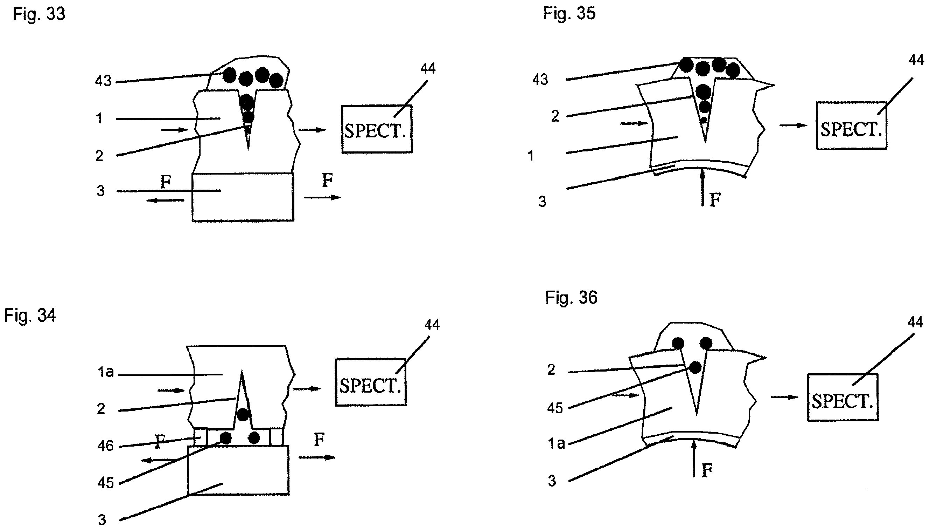

Wenn auf eine Deckschicht verzichtet wird und die Risse 2 des erfindungsgemäßen Lichtleiters 1 so einer möglichen Verschmutzung ausgesetzt werden, kann dies gemäß einer bevorzugten aber auch eigenständig nutzbaren Weiterbildung der Erfindung analytisch verwertet werden. Näheres kann den Erläuterungen zu den Fig. 33 bis 36 weiter unten entnommen werden.

Fig. 10 zeigt eine Ausführungsform des erfindungsgemäßen Lichtleiters 1, bei welchem jeweils zwischen Lichtleiter 1 und Deckschicht 23 und zwischen Lichtleiter 1 und Träger 3 eine Zwischenschicht 24 eingebracht ist. Wie der Graph zeigt, hat diese einen geringeren Brechungsindex als der Lichtleiter 1. Durch den geringeren Brechungsindex in der (den) Zwischenschicht(en) 24 kommt es zu Totalreflexion im Inneren des Lichtleiters 1, wodurch das Licht nicht bis zur Deckschicht 23 vordringt. Dadurch wird verhindert, dass die Deckschicht, welche beispielsweise auch zur Abschattung dienen kann, Licht absorbieren kann, wodurch die Lichtintensität nicht durch die Deckschicht 23 abnehmen kann, insbesondere da eine solche Deckschicht häufig in Schwarz ausgeführt ist.

Weiters wird dadurch verhindert, dass Licht an den Rissen oben oder unten vorbei geleitet wird, was insbesondere bei sehr stark miniaturisierten Sensoren mit entsprechend klein dimensionierten erfindungsgemäßen Lichtleitern besonders vorteilhaft ist.

Selbstverständlich besteht auch die Möglichkeit die Deckschicht 23 selbst spiegelnd zu gestalten, allerdings ist es technisch sehr viel aufwändiger, eine derartige spiegelnde Deckschicht herzustellen. Weiters kann innere Totalreflexion verlustfrei erfolgen, was bei einer spiegelnden Deckschicht rein rechnerisch schon kaum zu erreichen ist.

Zusätzlich bringt die Herstellung erfindungsgemäßer Lichtleiter mit einer spiegelnden Deckschicht 23 eigene Probleme mit sich, da dabei Spannungen entstehen können, die Einfluss auf die Bildung von Rissen bzw. die gesamte strukturelle Integrität des Lichtleiters nehmen und entsprechend berücksichtigt werden müssen.

Während die Lichtleiter 1 von Fig. 9 und Fig. 10 einen rechteckigen Querschnitt haben, zeigen Fig. 11 und Fig. 11a eine Ausführungsform mit einer alternativen Querschnittsgeometrie des erfindungsgemäßen Lichtleiters 1. Bei dieser Ausführungsform sind die Deckschicht 23 und der Träger 3 zum Lichtleiter 1 großteils beabstandet. Dadurch können unbeabsichtigte Verluste in der Lichtintensität I vermieden werden, da dadurch die interne Totalreflexion innerhalb des Lichtleiters (abseits der Risse) begünstigt wird. Die Beabstandung erfolgt, wie in Fig. 11 ersichtlich, über eine Ausnehmung 25 an der Ober- und Unterseite des Lichtleiters 1. Der Graph zeigt, dass der Brechungsindex des Lichtleiters im Bereich zwischen den Ausnehmungen konstant ist.

In Fig. 12 ist ein Lichtleiter 1 gezeigt, welcher über einen nicht konstanten Brechungsindex verfügt. Auch bei dieser Ausführungsform eines erfindungsgemäßen Lichtleiters 1 werden die Vorteile interner Totalreflektion zwischen dem inneren und äußeren Bereich des Lichtleiters 1 genutzt, wie bereits zu Fig. 10 erläutert wird.

Fig.13 zeigt einen erfindungsgemäßen Lichtleiter 1 mit rundem Querschnitt, welcher auf einer Montageschicht 26 angeordnet ist und von einer Hüllschicht 27 begrenzt wird. Prinzipiell gilt, dass man mit mehreren Schichten, welche in der Regel auch unterschiedliche mechanische Eigenschaften aufweisen, das (weitere) Risswachstum beeinflussen kann. Mit Risswachstum ist aufgrund der mechanischen Belastung des Lichtleiters während der Verwendung des Lichtleiters zu sensorischen Zwecken zu rechnen. Der Fachmann wird daher die Risse und Schichten bevorzugt so abstimmen, dass die Langzeitstabilität des Sensors möglichst hoch ist. In einem einfachen Anwendungsbeispiel wird beispielsweise das Risswachstum in einem erfindungsgemäßen Lichtleiter 1 aus Glas durch eine Hüllschicht 27 aus einem elastischen Polymer oder Silikat zur Gänze gestoppt.

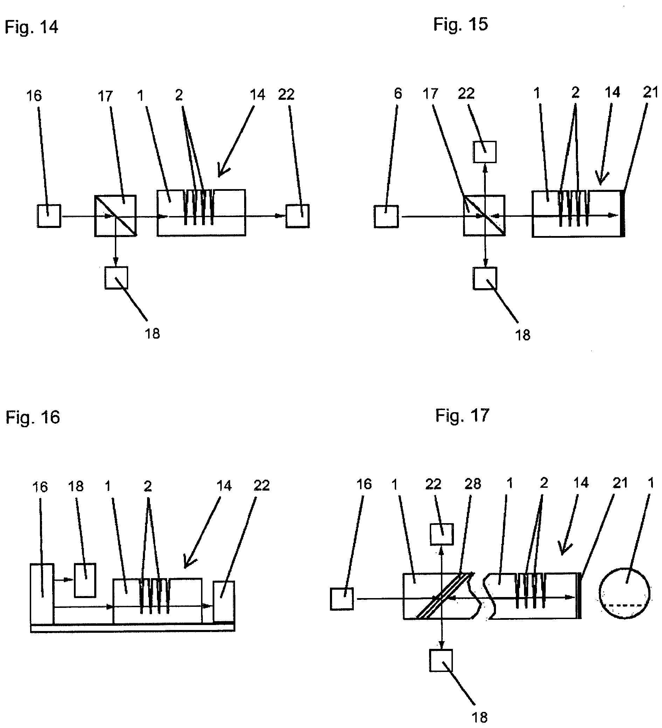

Wie bereits weiter oben erläutert ist für eine gleichzeitige Dehnungs- und Krümmungs-Messung eine gegensinnige Anordnung von wenigstens zwei erfindungsgemäßen Lichtleitern erforderlich. Die in den Figuren 14 bis 17 schematisch gezeigten SensorAnordnungen sind für diesen Anwendungsfall entsprechend zu verdoppeln. Der Übersicht halber ist jeweils nur ein erfindungsgemäßer Lichtleiter mit entsprechender Peripherie gezeigt.

Fig. 14 zeigt den prinzipiellen Aufbau eines Sensors 14 mit erfindungsgemäßen Lichtleitern 1. Das Licht verlässt auch hier zunächst die Lichtquelle 16 und gelangt dann in den Strahlteiler 17, von wo aus ein Teil des Lichts in einem Eingangssensor 18 erfasst wird. Der übrige Strahl durchwandert dann den erfindungsgemäßen Lichtleiter 1. Das aus dem Lichtleiter 1 austretende Licht wird dann (ohne Spiegelung) durch den Ausgangssensor 22 erfasst.

Fig. 15 zeigt den Aufbau des Sensors von Fig. 8 in der Darstellungsweise von Fig. 14.

Fig. 16 zeigt einen Sensor 14, bei welchem ein Teil des Lichts, welches von der Lichtquelle 16 erzeugt wird, direkt in den Eingangssensor 18 gelangt. Das übrige Licht durchläuft den erfindungsgemäßen Lichtleiter 1 und gelangt dann in den Ausgangssensor 22.

Bei der in Fig. 17 gezeigten Ausführungsform wird auf einen Strahlteiler als eigenständiges Bauteil verzichtet. Stattdessen wird dieser in Form eines zusätzlichen Risses 28 im erfindungsgemäßen Lichtleiter integriert. Um dabei die für die Funktion als Strahlteiler erforderlichen Bedingungen frustrierter Totalreflexion zu erhalten, sollte der Riss davor geschützt werden, sich mit den für sensorische Zwecke vorgesehenen Rissen gemeinsam zu weiten. Dazu kann eine verformungsfeste Umhüllung wenigstens teilweise um den Lichtleiter im Bereich des zusätzlichen Risses 28 vorgesehen sein. Eine weitere Maßnahme, um das Weiten des zusätzlichen Risses 28 zu vermeiden, ist, diesen räumlich anders als die üblichen Risse zu orientieren. Eine mögliche Ausführungsform dazu zeigt Fig. 17, in welcher der zusätzliche Riss 28 um 90° zu den erfindungsgemäßen Rissen gedreht im Lichtleiter 1 angeordnet ist. Um eine solche Anordnung besonders einfach zu gestalten, weist der Lichtleiter in der dargestellten Ausführungsform einen runden Querschnitt auf, wie es in Fig. 17a gezeigt ist. Andere, beispielsweise quadratische, Querschnittsformen sind selbstverständlich ebenso denkbar.

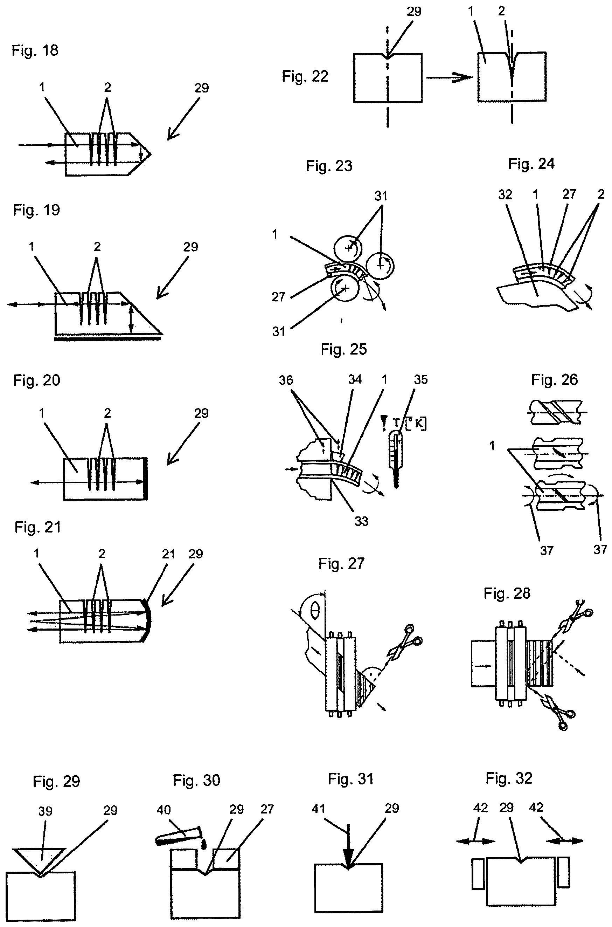

Wie bereits zu Fig. 8 erläutert kann es vorteilhaft sein, wenn das in den erfindungsgemäßen Lichtleiter geleitete Licht an dessen Ende 29 reflektiert wird. Dies kann auf unterschiedliche Arten bewerkstelligt werden, wie beispielhaft in den Figuren 18 bis 21 gezeigt wird.

Fig. 18 zeigt das Ende 29 des erfindungsgemäßen Lichtleiters 1, welches so geformt ist, dass es zu einer doppelten internen Totalreflexion kommen kann. Die Form kann beispielsweise durch Schneiden oder Schleifen geschaffen werden. Der Vorteil bei dieser Ausführungsform ist, dass kein reflektierendes Element am Ende 29 des Lichtleiters 1 erforderlich ist.

Fig. 19 zeigt das Ende 29 des Lichtleiters 1, welches in dieser Ausführungsform so geformt ist, dass es zu einfacher interner Totalreflexion kommt. Dadurch kann das Spiegelelement 21 unterhalb des Lichtleiters angeordnet werden, was in der Gestaltung eines Sensors mit einem erfindungsgemäßen Lichtleiter vorteilhaft sein kann. Alternativ kann anstelle des Spiegelelementes 21 auch der Ausgangsdetektor 22 an dieser Stelle angeordnet sein.

Fig. 20 zeigt das Ende 29 des Lichtleiters 1, wie es in der in Fig. 8 gezeigten Ausführungsform angewendet wird. Dabei ist ein planes Spiegelelement 21 am Ende 29 des Lichtleiters 1 angeordnet.

Das Ende 29 des in Fig. 21 gezeigten Lichtleiters 1 ist abgerundet geformt und ein angepasstes Spiegelelement 21 ist an das Ende 29 des Lichtleiters angeformt. Dadurch können den Lichtleiter 1 durchlaufende Lichtstrahlen gebündelt werden.

In den Figuren 22 bis 32 werden verschiedene Aspekte bei der Herstellung erfindungsgemäßer Lichtleiter 1 betrachtet. Dabei dient eine in den Figuren dargestellte und beschriebene Kerbe 29 lediglich der Veranschaulichung und stellt eine lokale Schwächung des Lichtleiters dar. Eine Schwächung kann auch ohne Materialabtrag erfolgen und rein struktureller und/oder chemischer Natur sein. Derartige Schwächungen sind nicht in jedem Fall sicht- bzw. darstellbar. Die über die Kerbe 29 getroffenen Aussagen gelten daher, wo anwendbar, im gleichen Maße auch für andere sichtbare und nicht sichtbare Schwächungen des Lichtleiters.

Fig. 22 zeigt eine Prinzipskizze eines Herstellungsverfahrens eines erfindungsgemäßen Lichtleiters 1 mit einem Riss 2. In der dargestellten Durchführungsform des Verfahrens wird zunächst eine Kerbe 29 im Lichtleiter angebracht. Dann wirkt eine Kraft auf den Lichtleiter und die Kerbe vertieft sich zu einem Riss 2.

In der in Fig. 23 gezeigten Durchführungsform wirkt die Kraft zum Erzeugen der Risse in Form von Walzen 31 auf den Lichtleiter 1. Man erkennt, dass nur der Lichtleiter selbst Risse erhält, die Hüllschicht 27 jedoch unverletzt bleibt. Dieser Effekt kann beispielsweise durch die Wahl unterschiedlich spröder Materialien erzeugt werden und dient dazu, die strukturelle Integrität des Lichtleiters zu unterstützen.

In der Fig. 24 wird der Lichtleiter 1 zum Erzeugen der Risse 2 über eine Kante 32 gezogen.

Fig. 25 zeigt einen aus einem Spalt 33 austretenden Lichtleiter 1, dessen Verformung durch einen Stempel 34 herbeigeführt wird.

Grundsätzlich können beim Erzeugen der Risse verschiedene Bedingungen auf die Größe und Qualität der Risse Einfluss haben. Diese sind beispielhaft ebenfalls in Fig. 25 gezeigt. So hat beispielsweise die Temperatur (symbolisiert durch ein Thermometer 35) Einfluss auf die Sprödigkeit des Materials selbst. Weiters können durch gezielte Temperaturunterschiede auch innere Spannungen erzeugt werden, die unabhängig von anderen Methoden zu den weiteren oben beschriebenen Schwächungen des Materials führen können.

Selbstverständlich ist es auch möglich, derartige Spannungen direkt bei der Herstellung, beispielsweise beim Auftragen der Hüllschicht 27, der Deckschicht 23 oder des Trägers 3, zu erzeugen.

Schwingungen (dargestellt durch die Pfeile 36) können die Beschaffenheit der Begrenzungsflächen 9 beeinflussen. So kann der Lichtleiter in einer bevorzugten Weiterbildung des Verfahrens mittels Ultraschall in Schwingung versetzt werden, um besonders vorteilhafte Begrenzungsflächen 9 zu erzeugen.

Grundsätzlich können Schwingungen auch ergänzend zu den übrigen genannten Methoden vorteilhaft eingesetzt werden. Beispielsweise können auch die Walzen 31 in Fig. 23, der Lichtleiter in Fig. 22, oder die Kante 32 in Fig. 24 schwingen. Analog kann beispielsweise auch der Lichtleiter in Fig. 26 Drehschwingungen mit Ultraschall vollführen.

In Fig. 26 ist eine alternative Durchführungsform eines Verfahrens zum Erzeugen der Risse 2 im Lichtleiter 1 gezeigt. Dabei wird zunächst die Hüllschicht 27 bereichsweise ausgedünnt. Dann wird eine Scherkraft (dargestellt durch die Pfeile 37) auf den Lichtleiter ausgeübt.

Fig. 27 zeigt eine erste Methode zum Erzeugen des Einfallswinkels $\theta$. Bei dieser Methode werden die Risse im Lichtleiter direkt im gewünschten Einfallswinkel $\theta$ erzeugt. Dafür werden in der gezeigten Durchführungsform Walzen 31 analog zu Fig. 23 verwendet und der Lichtleiter 1 wird im Einfallswinkel $\theta$ durch die Walzen 31 geführt. Es sind aber auch andere Möglichkeiten denk- und anwendbar.

Bei der in Fig. 28 gezeigten Durchführungsform werden die Risse 2 zunächst orthogonal zu einer Längsrichtung eines Lichtleiters 1 erzeugt, der eine flache Querschnittsform aufweist. Erst nach dem Erzeugen der Risse 2 wird der Lichtleiter 1 so zurechtgeschnitten (dargestellt durch Scheren 38), dass der Einfallswinkel $\theta$ entsteht.

Wie bereits zu Fig. 22 erläutert, kann es vorteilhaft sein, den Lichtleiter mit Kerben 29 zu versehen, um das Entstehen erfindungsgemäßer Risse 2 zu steuern. Die Figuren 29 bis 32 zeigen exemplarisch verschiedene Möglichkeiten, derartige Kerben 29 zu erzeugen.

Bei der in Fig. 29 gezeigten Methode wird die Kerbe 29 mechanisch durch einen scharfen Gegenstand, beispielsweise einen Keil 39 oder eine Klinge, erzeugt. Diese Methode ist besonders dann vorteilhaft, wenn mehrere Keile 39, beispielsweise auf einer Walze, hintereinander angeordnet sind, da so viele Kerben gleichzeitig erzeugt werden können.

Fig. 30 zeigt eine zweite Methode zum Erzeugen der Kerbe 29, bei welcher zunächst die Hüllschicht 27 entlang des gewünschten Kerbenverlaufs (und somit auch entlang des gewünschten Rissverlaufs) entfernt wird. Dies kann beispielsweise durch Schneiden, Schmelzen, Lichtbehandlung, wie beispielsweise UV- oder Elektronenstrahl-Lithographie, oder Verdampfen erfolgen. Dann wird die Kerbe an der so freigelegten Stelle des Lichtleiters 1 chemisch abgetragen (dargestellt durch ein Reagenzglas 40). Vorteilhaft ist an dieser Methode, dass sie besonders präzise ist.

Bei der in Fig. 31 gezeigten Durchführungsform wird die Kerbe 29 bzw. Schwächung durch einen Strahl (dargestellt durch einen Pfeil 41) erzeugt. Dabei können verschiedene Strahltechniken im Nano- bis Mikrometerbereich zum Einsatz kommen. So kann eine Schwächung herbei geführt werden, indem, beispielsweise durch UV-, Elektronen-, Röntgen- , oder Ionenstrahlen, chemische Bindungen aufgebrochen werden.

Weiters ist es auch möglich, dass eine tatsächliche Kerbe 29 entsteht, beispielsweise indem mit einem Laser mit geeigneter Wellenlänge Material abgedampft wird.

Eine Kombination aus einer internen Schwächung und einer ausgeprägten Kerbe 29 kann ebenso erzeugt

werden. So tragen Ionenstrahlen an der Oberfläche des Lichtleiters Material ab und zerstören die chemischen Bindungen unter dem abgetragenen Material.

Im Gegensatz dazu tragen auf die Oberfläche des Lichtleiters gestrahlte Elektronen nichts ab, zerstören aber lokal chemische Bindungen und führen zum Erhitzen und elektrischer Aufladung.

Diese Methode ist vor allem bei Lichtleitern 1 aus besonders harten Materialien oder mit besonders großem Querschnitt vorteilhaft.

Bei der in Fig. 32 gezeigten Durchführungsform wird die Kerbe durch gezielte Materialermüdung durch Schwingungen (dargestellt durch Pfeile 42) erzeugt. Wie bereits oben erläutert, kann dadurch die Beschaffenheit der Risse 2 positiv beeinflusst werden.

Grundsätzlich ist es aber auch möglich, die Risse durch andere mechanische Verfahren, wie beispielsweise Schneiden oder Nanoimprinten, zu erzeugen, oder die Risse direkt bei der Herstellung des Lichtleiters durch eine entsprechende Gussform vorzusehen.

Wie bereits weiter oben zu Fig. 9 erläutert, kann der erfindungsgemäße Lichtleiter 1 bei zur Umgebung hin geöffneten Rissen für alternative sensorische Zwecke verwendet werden. Diese alternative und unabhängig von den weiter oben beschriebenen Ausführungsformen vorteilhafte Verwendung des erfindungsgemäßen Lichtleiters wird im Folgenden näher erläutert.

Da die Weite W der Risse vorzugsweise im Bereich von wenigen bis wenigen hundert Nanometern liegt, können bei einer Öffnung der Risse zur Umgebung hin auch nur (Nano-)Partikel einer bestimmten Größe in die Risse eindringen. Dabei verändern sich abhängig von den in die Risse gelangten Materialien die optischen Eigenschaften der Risse.

Findet das Öffnen der Risse daher kontrolliert statt und wird gleichzeitig eine Spektralanalyse des in den Lichtleiter eingeleiteten, vorzugsweise beim Einleiten weißen, Lichts durchgeführt, kann sowohl die Partikelgröße als auch die Zusammensetzung der in die Risse eingedrungenen Partikel und/oder anderer Substanzen analysiert werden. Weiters können beispielsweise durch Verändern der Polarisationsrichtung des Lichtes zusätzliche Informationen über die Geometrie der Partikel gewonnen werden, etwa wenn Partikelplasmonen angeregt werden und die Partikel ggf. auch durch die Risse oder andere Mittel, wie z.B: elektromagnetische Felder, Schall oder Strömung, zuvor geometrisch ausgerichtet wurden.

Partikel bekannter Geometrie, insbesondere metallische Partikel, können auch in die Risse, insbesondere die Risswände, fix eingebracht werden, um über angeregte Partikelplasmonen die chemische Analytik zu verbessern. So können mehrere Analyseschritte eingespart werden und die Analyse kann online erfolgen.

Eine Analyse von Partikelgröße und chemischer Zusammensetzung kann beispielsweise beim Ermitteln von Feinstaubbelastung gewünscht sein, da von vielen Stoffen bekannt ist, dass sie mit Unterschreiten einer bestimmten Partikelgröße wesentlich gesundheitsschädlicher sind als davor.

Grundsätzlich kann diese Anwendungsform des erfindungsgemäßen Lichtleiters vorteilhafterweise zur Bestimmung und Charakterisierung von Nanopartikeln in der Nanotechnologie eingesetzt werden.

Zwei mögliche Anwendungsbeispiele werden anhand der stark schematisierten Darstellungen der Fig. 33 bis 36 erläutert.

Fig. 33 zeigt einen erfindungsgemäßen Lichtleiter 1, der auf einem Träger 3 angeordnet ist. Auf den Träger wird eine kontrollierte Kraft F ausgeübt, wodurch der Riss 2 geweitet ist und Partikel 43 in ihn gelangen können. Licht (dargestellt durch Pfeile) durchläuft den Lichtleiter und die eingedrungenen Partikel und wird dann in einer entsprechenden Vorrichtung 44 spektral analysiert.

Auch bei dieser speziellen Anwendung kann es sinnvoll sein, zwei erfindungsgemäße Lichtleiter in einem Sensorelement zu verwenden. Dabei dient der zweite Lichtleiter als Referenz für den ersten Lichtleiter.

Einen solchen Referenzlichtleiter 1a zeigt Fig. 34. Auf diesen wirken gleich große Kräfte F wie auf den analytisch verwendeten Lichtleiter von Fig. 33. Dies lässt sich besonders einfach umsetzen, indem in einer bevorzugten Weiterbildung der Anwendung beide Lichtleiter auf demselben Träger 3 angeordnet sind.

Im Bereich der Risse 2 des Referenzlichtleiters befinden sich Referenzpartikel 45, die durch Begrenzungen 46 im Bereich des Risses 2 gehalten werden. Weiters verhindern die Begrenzungen 46, dass unerwünschte Partikel zum Referenzlichtleiter gelangen.

Fig. 35 zeigt eine zweite beispielhafte Ausführungsform eines analytisch verwendeten, erfindungsgemäßen Lichtleiters 1. Bei dieser wirkt die Kraft F, mit der eine gelenkte Verformung des Lichtleiters erzielt werden soll, von unten auf den Leiter und erreicht ein Aufweiten der Risse 2 durch Biegen. Einen entsprechenden Referenzlichtleiter 1a zeigt Fig. 36.

Grundsätzlich kann ein zweiter Lichtleiter auch ganz ohne Partikel genutzt werden, um über die weiter oben beschriebenen, verformungsbasierten Anwendungen die genaue Rissweite des analytisch verwendeten Lichtleiters zu bestimmen.

Eine Kombination aus allen drei Lichtleitern (analytisch angewendet, die Verformung erfassend und Referenzlichtleiter mit Referenzpartikeln) ist selbstverständlich ebenso denkbar. Auch in einer solchen Anwendungsform kann es sinnvoll sein, das Licht abwechselnd in die verschiedenen Lichtleiter zu koppeln.

Die gesteuerte Verformung des Lichtleiters kann dabei beispielsweise durch Piezoaktuatoren erfolgen.

Grundsätzlich kann der erfindungsgemäße Lichtleiter für viele weitere Anwendungen verwendet werden.

So kann der Lichtleiter beispielsweise durch ein Peltier-Element gekühlt bzw. abwechselnd gekühlt und beheizt werden. Kondensierendes Wasser führt dabei zu einer Änderung der Intensität des aus dem Lichtleiter austretenden Lichts und kann gemeinsam mit der Differenz zwischen Raumtemperatur und Lichtleiter-Temperatur Aufschluss über die relative Luftfeuchtigkeit in der Umgebung des Lichtleiters geben.

In einem weiteren Anwendungsbeispiel könnte der erfindungsgemäße Lichtleiter auf einer Membran angebracht werden und Schwingungen der Membran erfassen. In diesem Anwendungsbeispiel könnte der Lichtleiter dann zum Beispiel als Mikrofon oder Drucksensor arbeiten. Eine Weiterbildung dieser Ausführungsform wäre beispielweise, einen sehr dünnen Lichtleiter direkt auf den Saiten eines Saiteninstrumentes anzubringen. Der erfindungsgemäße Lichtleiter könnte dabei als Klangabnehmer dienen.

Auch membranlose Mikrofone oder Drucksensoren lassen sich herstellen, indem der Einfallswinkel $\theta$ knapp größer, typischerweise um weniger als 1° größer als der kritische Winkel der Totalreflexion $(\theta \leq 90 - \arcsin(\frac{n_m}{n}))$, gewählt wird, insbesondere $\theta \leq 90 - \arctan(\frac{n_m}{n})$. Durch eine druckinduzierte Brechungsindexänderung des Mediums in den Rissen 2 kommt es dabei zu einer Lichtintensitätsmodulation des durchtretenden Lichtes an den Rissen 2. Es können so Druckschwankungen bzw. Schallfrequenzen bis in den MHZ-Bereich hinein gemessen werden. Beispielsweise können durch einen Sensor extrem große Druckbereiche abgedeckt werden, von "fast Vakuum" bis zu gegebenenfalls hunderten bar, wobei der Sensor in jedem Druckbereich eine besonders hohe Empfindlichkeit beibehält, d.h. dass der Sensor in einem Hochdrucktank trotzdem auch geringste Druckschwankungen registrieren kann.

Beim Anwendungsbeispiel als membranlose Mikrofone oder Drucksensoren kann neben dem erfindungsgemäßen Lichtleiter 1 mit Rissen 2 gegebenenfalls eine drehbar gelagerte Lichtquelle und ein Detektor vorgesehen sein. Die Lichtquelle, vorzugsweise eine Lichtquelle mit polarisiertem Licht, beispielsweise eine Weißlichtquelle oder eine Laserdiode, ist drehbar gelagert, um den Einfallswinkel $\theta$ fein justieren und um die Polarisationsrichtung ändern zu können. Das austretende Licht kann mit einem Spektrometer gemessen werden.

Analog zum Erfassen der Schwingungen für akustische Sensorik kann der erfindungsgemäße Lichtleiter auch auf einem Material mit bekannter Wärmeausdehnung angebracht werden und so als sehr präzises Thermometer mit großer Temperaturreichweite genutzt werden. Wird beispielsweise ein Material mit hohem Schmelzpunkt (z.B. Nickel) verwendet, kann durch einen erfindungsgemäßen Lichtleiter eine sehr kostengünstige Möglichkeit geschaffen werden, mit einem Sensor einen Temperaturbereich von mehreren hundert Kelvin abzudecken (z.B. 200K bis 800K).

Weiters ist es denkbar, die Lichtleiter auch im nicht sichtbaren Bereich des elektromagnetischen Spektrums anzuwenden, da auch diese Form von Strahlung den gleichen Prinzipien wie Licht folgt. Dabei ist natürlich die Weite der Risse entsprechend anzupassen. Verwendet man beispielsweise Terrahertzstrahlung, wären eher Risse im Millimeter-Bereich als im Nanometer-Bereich zu erzeugen.

Bezugszeichenliste:

| | |
|---|---|
| 1 Lichtleiter | 34 Stempel |
| 1a Referenzlichtleiter | 35 Thermometer |
| 2 Risse | 36 Pfeil (Schwingung) |
| 3 Träger | 37 Pfeil (Scherbewegung) |
| 4 Mittel zum Einkoppeln von Licht | 38 Scheren |
| 5 Mittel zum Auskoppeln von Licht | 39 Keil |
| 6 Pfeil Eingangsintensität | 40 Reagenzglas |
| 7 Pfeil Ausgangsintensität | 41 Pfeil (Strahl) |
| 8 Achse (Ausbreitungsrichtung) | 42 Pfeile (Schwingung) |
| 9 Begrenzungsflächen (Riss) | 43 Partikel |
| 10- | 44 Vorrichtung zur Spektralanalyse |
| 11 Pfeile Reflexionsintensität | 45 Referenzpartikel |
| 12 Sensorelement | 46 Begrenzungen |
| 13 optisches Trennelement | |
| 14 Sensor | $I_I$ Eingangsintensität |
| 15 Steuerungseinheit | $I_T$ Ausgangsintensität |

(fortgesetzt)

| 16 Mittel zum Erzeugen von Licht / Lichtquelle | $I_R$ Reflexionsintensität |
|---|---|
| | D Höhe Riss |
| 17 Strahlteiler | W Weite Riss |
| 18 Eingangsdetektor | α Öffnungswinkel Riss |
| 19 Lichtleiter (herkömmlich) | θ Einfallswinkel zwischen Ausbreitungsrichtung des Lichtleiters und der Längsrichtung der Risse |
| 20- | |
| 21 Spiegelelement | |
| 22 Ausgangsdetektor | F Kraft (die auf den Lichtleiter wirkt) |
| 23 Deckschicht | |
| 24 Zwischenschicht | |
| 25 Ausnehmung | |
| 26 Montageschicht | |
| 27 Hüllschicht | |
| 28 Riss als Strahlteiler | |
| 29 Kerbe | |
| 30 - | |
| 31 Walze | |
| 32 Kante | |
| 33 Spalt | |

## Patentansprüche

**1.** Lichtleiter (1) mit wenigstens einem Riss (2), wobei eine Längsrichtung des Risses zu einer Ausbreitungsrichtung des Lichtleiters (1) einen Einfallswinkel Θ einschließt, und wobei der Riss (2) von zwei Begrenzungsflächen (9) begrenzt wird, die jeweils im Wesentlichen parallel zur Längsrichtung des Risses (2) liegen, wobei die beiden Begrenzungsflächen (9) einen Öffnungswinkel (α) einschließen, und wobei der Öffnungswinkel (α) größer 0° ist, wobei der Lichtleiter einen Brechungsindex n hat, sich ein Medium, insbesondere Luft, im Riss befindet und einen Brechungsindex $n_m$ aufweist und für den Einfallswinkel Θ gilt: $\theta \leq 90 - \arctan(\frac{n_m}{n})$, insbesondere $\theta \leq 90 - \arcsin(\frac{n_m}{n})$, wobei sich eine erste Begrenzungsfläche in Ausbreitungsrichtung des Lichtleiters (1) am Übergang vom Lichtleiter (1) zum Medium befindet, sich eine zweite Begrenzungsfläche in Ausbreitungsrichtung des Lichtleiters (1) am Übergang von Medium zum Lichtleiter (1) befindet, an der ersten Begrenzungsfläche eine evaneszente Welle entsteht, und die zweite Begrenzungsfläche innerhalb der evaneszenten Welle angeordnet ist, und der Riss (2) eine geringere Höhe als die Höhe (D) des Lichtleiters aufweist.

**2.** Lichtleiter (1) nach Anspruch 1, **dadurch gekennzeichnet, dass** der Riss (2) eine Öffnung aufweist, und dass die Öffnung in einem Neutralzustand des Lichtleiters (1) eine Weite (W) von > 0 nm bis 25000 nm aufweist.

**3.** Lichtleiter (1) nach Anspruch 1 oder 2, **dadurch gekennzeichnet, dass** der Lichtleiter (1) wenigstens zwei Risse (2) aufweist, und dass alle Risse (2) des Lichtleiters (1) mit ihren Einfallswinkeln (θ) und ihren Öffnungswinkeln (α) im Wesentlichen gleich ausgerichtet sind.

**4.** Lichtleiter (1) nach Anspruch 1, 2, oder 3, **dadurch gekennzeichnet, dass** der Lichtleiter (1) ein Polymer, insbesondere Polystyrol, aufweist.

**5.** Lichtleiter (1) nach einem der Ansprüche 1 bis 4, **dadurch gekennzeichnet, dass** der Lichtleiter (1) aus einem Silikat besteht.

**6.** Optischer Sensor mit wenigstens einem Lichtleiter (1) und mit Mitteln zum Einspeisen und Auslesen von Licht in den und aus dem Lichtleiter (1), **dadurch gekennzeichnet, dass** der Lichtleiter ein Lichtleiter (1) nach einem der Ansprüche 1 bis 5 ist.

7. Optischer Sensor nach Anspruch 6, **dadurch gekennzeichnet, dass** der Sensor wenigstens zwei Lichtleiter (1) aufweist, und dass die Lichtleiter (1) mit entgegengesetzt ausgerichteten Öffnungswinkeln α der Risse angeordnet sind.

**Claims**

1. Light conductor (1) having at least one crack (2), wherein a longitudinal direction of the crack to a propagation direction of the light conductor (1) spans an angle of incidence (θ) and wherein the crack (2) is limited by two boundary surfaces (9), which are each substantially parallel to the longitudinal direction of the crack (2), wherein the two boundary surfaces (9) span an opening angle (α), and wherein the opening angle (α) is greater than 0°, whereby the light conductor has a refractive index n, that a medium, in particular air, is located in the crack and has a refractive index nm and that for the angle of incidence (θ) the following applies:

$$\theta \leq 90 - \arctan\left(\frac{n_m}{n}\right)$$

in particular

$$\theta \leq 90 - \arcsin\left(\frac{n_m}{n}\right)$$

whereby a first boundary surface is located in the direction of propagation of the light conductor (1) at the transition from the light conductor (1) to the medium, a second boundary surface is located in the direction of propagation of the light conductor (1) at the transition from the medium to the light conductor (1), on the first boundary surface an evanescent wave is produced, and the second boundary surface is arranged within the evanescent wave.

2. The light conductor (1) according to claim 1, **characterized in that** the crack (2) has an opening, and that the opening in a neutral state of the light conductor (1) has a width (W) of 0 nm to 25000 nm.

3. Light conductor (1) according to claim 1 or 2, **characterized in that** the light conductor (1) has at least two cracks (2), and that all the cracks (2) of the light conductor (1) with their angles of incidence (θ) and their opening angles (α) are aligned substantially identically.

4. Light conductor (1) according to claims 1, 2 or 3, **characterized in that** the light conductor (1) comprises a polymer, in particular polystyrene.

5. Light conductor (1) according to any one of claims 1 to 4, **characterized in that** the light conductor (1) consists of a silicate.

6. Optical sensor with at least one light conductor (1) and with means for feeding in and reading out of light in and out of the light conductor (1), **characterized in that** the light conductor is a light conductor(1) according to any one of claims 1 to 7.

7. Optical sensor according to claim 6, **characterized in that** the sensor has at least two light conductors (1), and that the light conductors (1) are arranged with oppositely oriented opening angles α of the cracks.

**Revendications**

1. Guide de lumière (1) avec au moins une fente (2), dans lequel un sens longitudinal de la fente forme par rapport à un sens de propagation du guide de lumière (1) un angle d'incidence θ, et
dans lequel la fente (2) est délimitée par deux surfaces de délimitation (9), qui sont respectivement sensiblement parallèles au sens longitudinal de la fente (2), dans lequel les deux surfaces de délimitation (9) forment un angle d'ouverture (α), et dans lequel l'angle d'ouverture (α) est supérieur à 0°, dans lequel le guide de lumière a un indice de réfraction n,

un milieu, en particulier de l'air, se trouve dans la fente et présente un indice de réfraction $n_m$ et s'applique pour l'angle de réfraction θ :

$$\theta \leq 90 - \arctan\left(\frac{n_m}{n}\right),$$

en particulier

$$\theta \leq 90 - \arcsin\left(\frac{n_m}{n}\right),$$

dans lequel
une première surface de délimitation se trouve dans le sens de propagation du guide de lumière (1) au passage du guide de lumière (1) au milieu, une deuxième surface de délimitation se trouve dans le sens de propagation du guide de lumière (1) au passage du milieu au guide de lumière (1), une onde évanescente se forme à la première surface de délimitation, et la deuxième surface de délimitation est disposée à l'intérieur de l'onde évanescente, et la fente (2) présente une hauteur inférieure à la hauteur (D) du guide de lumière.

2. Guide de lumière (1) selon la revendication 1, **caractérisé en ce que** la fente (2) présente une ouverture, et que l'ouverture présente dans un état neutre du guide de lumière (1) une largeur (W) > 0 nm jusqu'à 25000 nm.

3. Guide de lumière (1) selon la revendication 1 ou 2, **caractérisé en ce que** le guide de lumière (1) présente au moins deux fentes (2), et que toutes les fentes (2) du guide de lumière (1) sont orientées sensiblement de manière identique par leurs angles d'incidence (θ) et leurs angles d'ouverture (α).

4. Guide de lumière (1) selon la revendication 1, 2 ou 3, **caractérisé en ce que** le guide de lumière (1) présente un polymère, en particulier du polystyrène.

5. Guide de lumière (1) selon l'une des revendications 1 à 4, **caractérisé en ce que** le guide de lumière (1) est constitué de silicate.

6. Capteur optique avec au moins un guide de lumière (1) et avec des moyens pour introduire et trier de la lumière dans et hors du guide de lumière (1), **caractérisé en ce que** le guide de lumière est un guide de lumière (1) selon l'une des revendications 1 à 5.

7. Capteur optique selon la revendication 6, **caractérisé en ce que** le capteur présente au moins deux guides de lumière (1), et que les guides de lumière (1) sont disposés avec des angles d'ouverture α des fentes orientés à l'opposé.

$I_T$

$I_T$

$I_R$

7 5 1 2 3 III 4 6

7 2 11 1 8 6

$I_I$ Fig. 1

$I_I$ Fig. 2

Fig. 3

Fig. 4

$\alpha_c$ $\alpha$

2 1 9 9

W $W_c$

R=1/C

Fig. 5

$\alpha_d$ $\alpha$

2 1 9 9

W $W_d$

2 1 9 9 $\alpha$ D W

Fig. 6

1 13 1

12 2

Fig. 7

Fig. 8

Fig. 9

Fig. 11

Fig. 11a

Fig. 10

Fig 12

Fig. 13

EP 3 338 060 B1

14

Fig. 14

Fig. 15

Fig. 16

Fig. 17

Fig. 18

Fig. 19

Fig. 20

Fig. 21

Fig. 22

Fig. 23

Fig. 24

Fig. 25

Fig. 26

Fig. 27

Fig. 28

Fig. 29

Fig. 30

Fig. 31

Fig. 32

Fig. 33

43
1
2
3

F    F

SPECT.    44

Fig. 35

43
2
1
3

F

SPECT.    44

Fig. 34

1a
2
46
45
3

F    F

SPECT.    44

Fig. 36

2
45
1a
3

F

SPECT.    44

EP 3 338 060 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- The possibility of using a plastic optical fibre as a sensing element in civil structural health monitoring. **DRAGAN Z STUPAR et al.** PHYSICA SCRIPTA. INSTITUTE OF PHYSICS PUBLISHING, 15. November 2013, vol. 2013, 14031

- INVESTIGATION AND APPLICATION OF THE FRUSTRATED-TOTAL-INTERNAL-REFLECTION PHENOMENON IN OPTICAL FIBERS. **RAHNAVARDY K et al.** APPLIED OPTICS. OPTICAL SOCIETY OF AMERICA, 01. April 1997, vol. 36, 3183-2187